# EUROPEAN PATENT SPECIFICATION

(11) **EP 2 116 095 B1**
(45) Date of publication and mention of the grant of the patent: **23.01.2019**
(21) Application number: 07859083.3
(22) Date of filing: 17.12.2007
(51) Int. Cl.: H04W 36/00

(54) **APPARATUS, METHOD AND COMPUTER PROGRAM PRODUCT PROVIDING FASTER HANDOVER IN MOBILE WIMAX SYSTEM**
VORRICHTUNG, VERFAHREN UND COMPUTERPROGRAMMPRODUKT ZUR BEREITSTELLUNG EINES SCHNELLEREN HANDOVER IN EINEM MOBIL-WIMAX-SYSTEM
APPAREIL, PROCÉDÉ ET PRODUIT-PROGRAMME INFORMATIQUE PERMETTANT UN TRANSFERT PLUS RAPIDE DANS UN SYSTÈME WiMAX MOBILE

(30) Priority: 28.12.2006 US 877487 P; 02.02.2007 US 701593
(43) Date of publication of application: 11.11.2009
(73) Proprietor: Nokia Technologies Oy, 02610 Espoo (FI)
(72) Inventor: ZEXIAN, Li, FIN-02760 Espoo (FI); PICHNA, Roman, FIN-02620 Espoo (FI); VESTERINEN, Seppo, FIN-90460 Oulunsalo (FI)
(74) Representative: Ruuskanen, Juha-Pekka
(86) International application number: PCT/IB2007/003958
(87) International publication number: WO 2008/081251

(56) References cited:
- EP-A- 1 871 128
- WO-A-2005/120183
- WO-A-2006/131067
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)" INTERNET CITATION, 1 November 2006 (2006-11-01), pages 1-64, XP002481310 [retrieved on 2008-06-12]

## Description

### TECHNICAL FIELD:

The exemplary and non-limiting embodiments of this invention relate generally to wireless communication systems, methods, devices and computer program products and, more specifically, relate to techniques for handing off a mobile device from one fixed wireless network node to another.

### BACKGROUND:

Various abbreviations that appear in the description are defined as follows:
- HO: handover
- MS: mobile station
- BS: base station
- DCD: downlink channel descriptor
- UCD: uplink channel descriptor
- VoIP: voice over internet protocol
- UL: uplink
- DL: downlink
- IE: information element
- WiMAX: worldwide interoperability for microwave access (IEEE 802.16 standard)

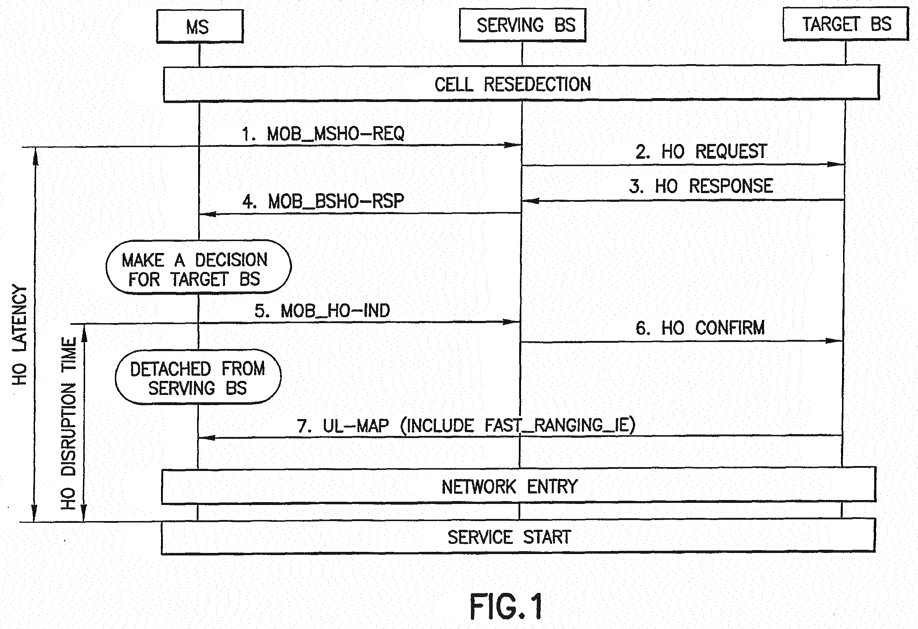

Handover is a process in which a MS migrates from the air-interface provided by one BS to the air-interface provided by another BS. According to the current IEEE 802.16e 2005 (published in Feb. 2006) standard, the HO process includes the following main steps (reference can also be made to Figure 1 which shows the MS-initiated HO case):
A. Cell reselection: The MS may use neighbor BS information acquired from a decoded MOB_NBR-ADV (neighbor BS advertisement) message, or may make a request to schedule scanning intervals or sleep-intervals to scan, and possibly range, neighbor BSs for the purpose of evaluating MS interest in handover to potential target BS. The cell reselection process need not occur in conjunction with any specific, contemplated HO decision.
B. HO decision and initiation: A handover begins with a decision for the MS to handover from a serving BS to a target BS. The decision may originate either at the MS or at the serving BS. The HO decision consummates with a notification of the MS intent to handover through a MOB_MSHO-REQ (MS HO request) message (Message 1 in Figure 1) or a MOB_BSHO-REQ (BS HO request) message. The next steps are for network re-entry at the target BS. The MS stops transmission with the serving BS when it starts the network re-entry procedure.
C. Synchronization to target BS downlink: The MS synchronizes to the DL transmissions of the target BS and obtains DL and UL transmission parameters. If the MS had previously received a MOB_NBR-ADV message that included a target BS ID, physical frequency, downlink channel descriptor (DCD) and uplink channel description (UCD), this process may be shortened. If the target BS had previously received a HO notification from the serving BS over the backbone network, then the target BS may allocate a non-contention-based initial ranging opportunity indicated by UL-MAP.
D. Ranging: The MS and the target BS conduct handover ranging. The purpose of the ranging processing is to obtain adjustment parameters for timing, frequency and power from the target BS.
E. Termination of MS context: the final step in handover. Termination of the MS context is defined as the serving BS termination of all connections belonging to the MS and the context associated with them.

After step D, the MS can set up a connection with the target BS.

Figure 1 shows the various necessary messages related to the HO process for MS initiated HO (a normal standardized case). Cell reselection and network re-entry, except for the receiving of the UL-MAP (message 7 in Figure 1) are not included in the figure. As shown in Figure 1, HO latency begins at the time when the MS sends out the MOB_MSHO-REQ, and a HO disruption time (the time interval during handover when no data can be sent or received by the MS over the bearer channel, assuming L3 continuity) begins from the time that the MS sends out MOB_HO-IND. From Figure 1 it can be seen that the UL-MAP message, which includes a Fast_Ranging_IE, is sent only after the target BS receives the HO Confirm information (message 6 in Figure 1) from the serving BS. The Fast_Ranging_IE includes information descriptive of allocated unique CDMA ranging codes and ranging subchannels (e.g., in time and frequency) that are needed by the MS. In practice, it is very possible that the time between step 5 and step 7 is long due to transport latency between the serving and target BSs, especially for a case where there is no direct connection between the BSs and the message must be passed through a backhaul network path.

A very reasonable requirement for mobile WiMAX is to support the continuity of the connections, especially in the case of a real time application such as VoIP and real-time streaming. In these exemplary cases the HO disruption time should be minimized.

According to the HO procedure as currently specified it is necessary for the MS to receive the subchannel allocation information from the UL-MAP (message 7 in Figure 1) before the MS can begin the ranging process. Because of the possibly long transport time between BSs, it can take an undesirably long time for the MS to receive the UL-MAP if the target BS sends out this message only after it receives the HO Confirm message (message 6 in Figure 1) from the serving BS.
3GPP TS 36.300 V0.3.0 (2006-11): "Evolved Universal Terrestrial Radio Access (E-UTRA) and Evolved Universal Terrestrial Radio Access Network (E-UTRAN); Overall description; Stage 2 (Release 8)" shows in figure 10.1.2.1 the procedure for Intra-MME-UPA handover procedure as defined by the third generation partnership project. In the shown procedure user equipment performs synchronization to target eNB and then starts acquiring uplink timing advance which are used by the user equipment to send handover confirm messages to the target eNB.

### SUMMARY:

The invention is set out in the appended set of claims. The embodiments and/or examples of the following description which are not covered by the appended claims are considered as not being part of the present invention.

There are hereby provided target base station apparatus according to claim 1, base station apparatus according to claim 8, mobile station apparatus according to claim 9, methods according to claims 12, 13 and 14, and a computer program product according to claim 15.

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 is a message flow diagram showing MS initiated HO (normal standardized case).
Figure 2 is a message flow diagram in accordance with exemplary embodiments of this invention showing MS initiated HO (option 1: backwards compatible with both air-interface and protocol).
Figure 3 is a message flow diagram in accordance with exemplary embodiments of this invention showing MS initiated HO (option 2: backwards compatible with air-interface).
Figure 4 is a message flow diagram in accordance with exemplary embodiments of this invention showing a Network/BS initiated HO.
Figure 5 shows a simplified block diagram of various electronic devices that are suitable for use in practicing the exemplary embodiments of this invention.

### DETAILED DESCRIPTION:

The exemplary embodiments of this invention relate in general to mobility management in a mobile wireless WiMAX communication network. In particular, the exemplary embodiments of this invention provide a technique to achieve fast HO in order to reduce total HO-related data transmission disruption time.

The exemplary embodiments of this invention address and solve the problem of HO latency by introducing an efficient network signaling to achieve faster HO. In greater detail, by providing a protocol for the MS to receive the UL-MAP message much earlier than the conventional case shown in Figure 1, the HO latency and the HO disruption time are both reduced significantly. An allocation of the Fast_Ranging_IE during the HO preparation phase enables the radio resource to be utilized in a more efficient way.

It should be noted at the outset while the exemplary embodiments of this invention will be described in the context of the mobile wireless WiMAX communication network (i.e., IEEE 802.16e), the exemplary embodiments of this invention are not limited for use only with this particular mobile wireless network type, and may be used in whole or in part and/or adapted for use in whole or in part in other types of mobile wireless networks where a mobile device HO can occur between a serving network node and a target network node.

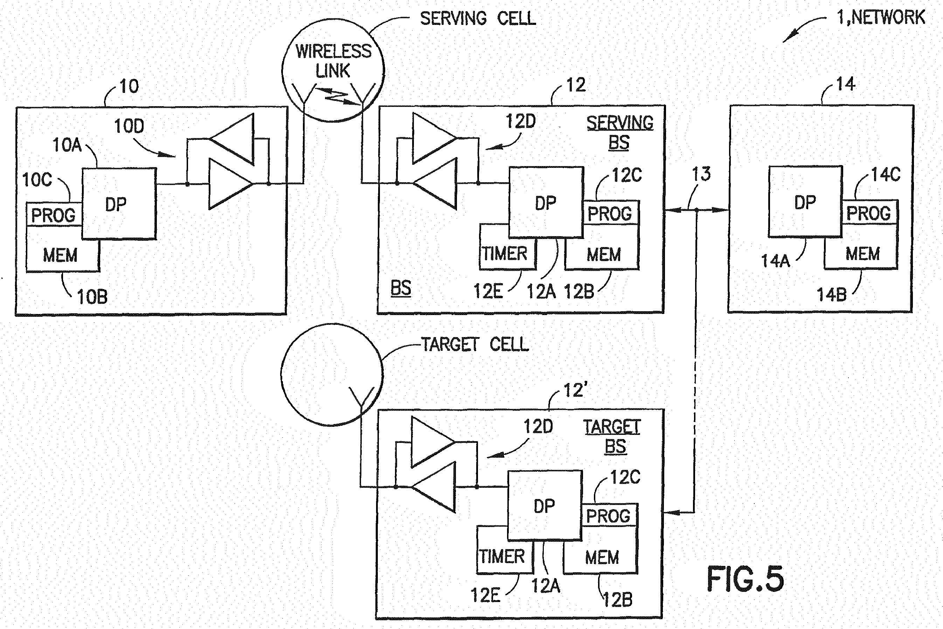

Before further describing the exemplary embodiments of this invention reference is made to Figure 5 for illustrating a simplified block diagram of various electronic devices that are suitable for use in practicing the exemplary embodiments of this invention. In Figure 5 a wireless network 1 is adapted for communication with a MS 10 via at least one BS 12. The network 1 in this non-limiting case is assumed to be a mobile wireless WiMAX communication network, and may include a network control element (NCE) 14 coupled to the BS 12 via a data link 13. The MS 10 includes a data processor (DP) 10A, a memory (MEM) 10B that stores a program (PROG) 10C, and a suitable radio frequency (RF) transceiver 10D for bidirectional wireless communications with the BS 12, which also includes a DP 12A, a MEM 12B that stores a PROG 12C, and a suitable RF transceiver 12D. The NCE 14 that also includes at least one DP 14A and a MEM 14B storing an associated PROG 14C. The PROGs 10C and 12C are assumed to include program instructions that, when executed by the associated DP, enable the electronic device to operate in accordance with the exemplary embodiments of this invention, as will be discussed below in greater detail.

Shown for completeness in Figure 5 is at least one second BS, referred to as BS 12'. During a HO event the BS 12 may be considered the serving or source BS, i.e., the BS to which the MS 10 is currently connected and communicating in the associated serving cell, and the BS 12' may be considered the target BS, i.e., the BS to which the MS 10 is to be connected and communicating with in the target cell after the HO procedure is completed. Note that in practice the serving cell and the target cell with at least partially overlap one another. Note further that during some typical HO events there may be, initially, a plurality of potential or candidate target BSs 12'.

It can also be noted that the illustrated connection of the data link 13 between the BS 12 and BS 12' is not intended to indicate a direct connection, and in practice this connection may be made through a network backhaul with one or more interposed network elements.

In general, the various embodiments of the MS 10 can include, but are not limited to, cellular phones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The exemplary embodiments of this invention may be implemented by computer software executable by the DP 12A of the BSs 12 and 12' in cooperation with the DP 10A of the MS 10, or by hardware, or by a combination of software and hardware.

The MEMs 10B, 12B and 14B may be of any type suitable to the local technical environment and may be implemented using any suitable data storage technology, such as semiconductor-based memory devices, magnetic memory devices and systems, optical memory devices and systems, fixed memory and removable memory. The DPs 10A, 12A and 14A may be of any type suitable to the local technical environment, and may include one or more of general purpose computers, special purpose computers, microprocessors, digital signal processors (DSPs) and processors based on a multi-core processor architecture, as non-limiting examples.

The exemplary embodiments of this invention provide efficient techniques for the MS 10 to receive the UL-MAP message soon after it is synchronized to the target BS 12'. Due to the operation of the MOB_NBR-ADV and scanning procedure, the synchronization time with the target BS 12' can be very short.

For scenarios in which the HO decision is originated from MS 10, two different techniques to provide an early UL-MAP, which includes the Fast_Ranging_IE, are described. A first technique to send the UL-MAP message early (earlier than would be done in accordance with conventional practice) is to set a Timer 12E at the target BS 12', the timer here is also called a send Timer, in which the Timer 12E is set for the target BS 12' to begin allocating the unique subchannel and CDMA codes to the MS 10 and send the UL-MAP. A different Timer to release the reserved resource can also be set. Note in Figure 5 that each BS is shown to include a Timer 12E, the timer here is also called a release Timer, as each can at some time function as the target BS. Note further that it is assumed that the Timer 12E may contain multiple timer functions that can be set and operated independently (e.g., Timer #1, Timer #2, etc.)

The second technique operates such that, after the serving BS 12 sends back the MOB_BSHO-RSP to the MS 10 (see message 4 in Figure 1), simultaneously, the serving BS 12 can inform the recommended target BS 12' via a HO Pre-confirmation message to allocate the unique CDMA ranging codes and ranging subchannel. Immediately after receiving HO Pre-confirmation message, and if the message is "Yes" which means the BS(s) are selected as target BS(s), the target BS(s) 12' (note that in practice the number of target BSs 12' may be greater than one) can allocate the HO ranging codes and subchannels to the MS 10 and send out the UL-MAP message.

For the scenarios in which the HO decision is originated from the BS 12 or at some other place in the network 1, in addition to the two techniques above, another technique includes the UL-MAP in a MOB_BSHO-REQ message which is derived from a HO Response from the target BS 12'. At the same time, the serving BS 12 informs the selection result to the target BS 12' and other neighbor BSs. Therefore, only the target BS 12' keeps the resource for the MS 10 and all other BSs release the ranging code and ranging subchannel after receiving a HO Cancellation message, thereby conserving radio resources.

Network re-entry begins with the MS 10 detaching from the serving BS 12 and attempting to synchronize with the target BS 12'. The synchronization processing procedure can be made faster if the target BS 12' parameters obtained from the MS scanning procedure are still valid. Only after receiving the UL-MAP from the target BS 12' can the MS 10 begin to send the ranging request to the target BS 12'.

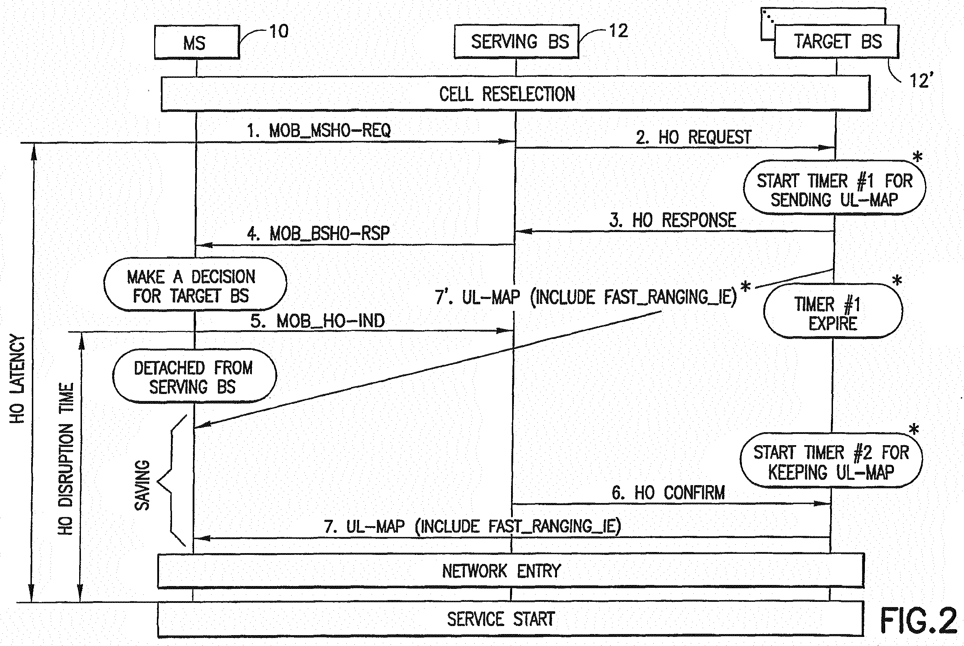

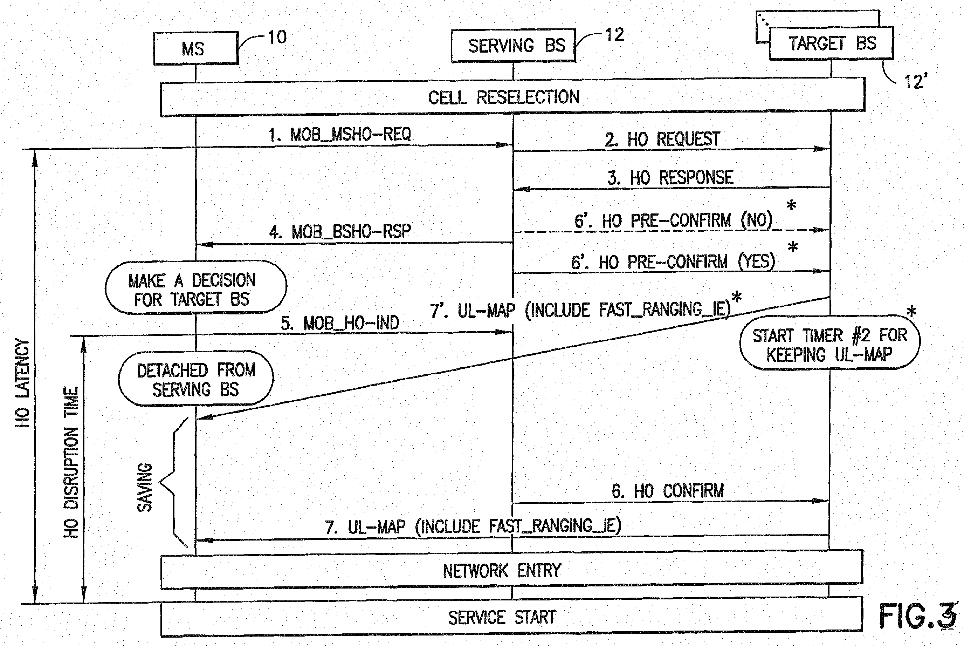

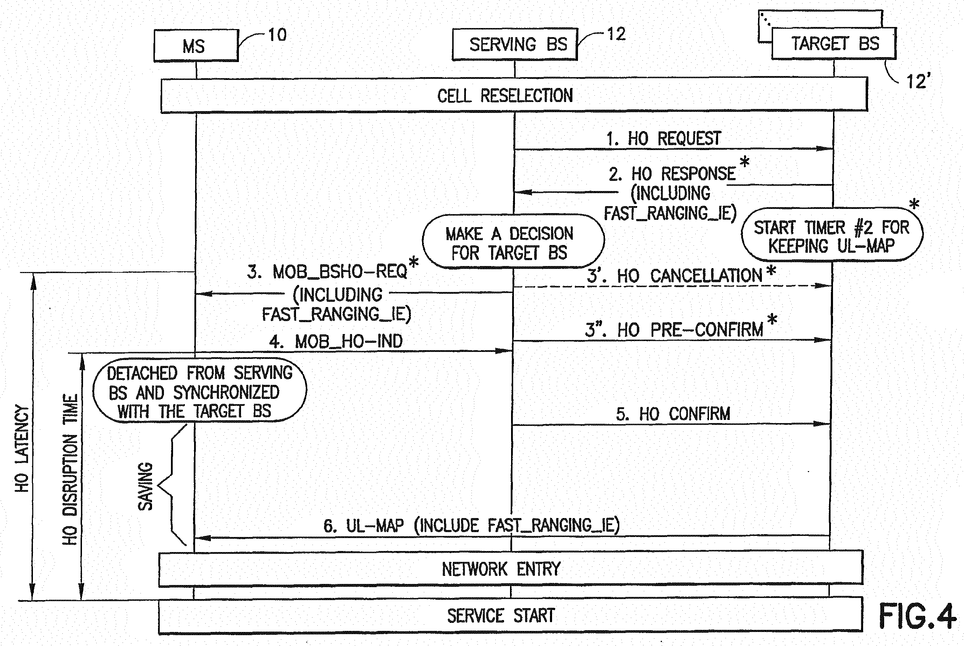

In the case of the MS 10 making the decision as to the final target BS 12', the exemplary embodiments of this invention consider two implementation options in order for the MS 10 to obtain the UL-MAP message as early as possible (described in Figures 2 and 3 below). For those scenarios in which a BS or the network make the decision of the final target BS 12', another technique is disclosed and is described below in reference to Figure 4.

It is noted that all other HO-related processing procedures not specifically mentioned in the ensuing descriptions of Figures 2, 3 and 4 are assumed to be unchanged from those already described in the current IEEE 802.16e 2005 standard.

Discussed first are those embodiments where the MS 10 makes the decision about the HO target. In Figures 2 and 3 (and 4) the enhanced messaging and operations, in accordance with the exemplary embodiments, is indicated by the use of an asterisk (*). In Figures 2, 3 and 4 the vertical axis represents time, and that portion designated 'Saving' indicates the amount of time saved in the HO disruption time by the use of the enhanced signaling in accordance with the exemplary embodiments.

Referring to Figure 2, and as opposed to normal operation, after the target BS 12' (one or more target BSs 12') receives the HO Request from the serving BS 12 in message 2, and if the target BS 12' is to accept the HO request, it starts a Timer #1 (one of the Timers 12E shown in Figure 1) for sending out the UL-MAP message that includes the allocation information of the ranging subchannel and CDMA ranging code for the MS 10. The value of the Timer #1 may be made a system optimization parameter that depends at least in part on the transport latency between the BSs 12, 12' and the processing time at the BSs 12,12' and the MS 10. When the Timer #1 expires, the target BS 12' sends the UL-MAP message (message 7') to the MS 10.

As there may be more than one BS 12' included in the MOB_MSHO-REQ/ MOB_BSHO-RSP messages, it is preferred that all of the potential target BSs 12' run a second Timer #2 to control how long the ranging subchannel and CDMA ranging codes will be allocated for the MS 10. In a case where the target BS 12' receives the HO Confirm message from the serving BS 12 (message 6), the Timer #2 is stopped automatically. If no HO Confirm message is received from the serving BS 12, the target BS(s) 12' (those not selected for the HO to the MS 10) release the resources allocated for the MS 10 when the Timer #2 expires.

This implementation minimizes any impact due to a long transport latency between BSs in that at least some of the signaling and related operations occur in parallel as opposed to in series as in the case of Figure 1. From the embodiment of Figure 2 the advantage realized in time savings can be seen clearly by comparing step 7 and step 7'. From the message flow it can be observed that as soon as the MS 10 detaches from the serving BS 12, and if the synchronization parameters are still valid (which is very possible), the MS 10 can obtain the necessary UL-MAP message very quickly. However, in the conventional case the MS 10 needs to wait for the UL-MAP message and related parameters until after the processing time at both serving BS 12 and the target BS 12', plus the (possibly indeterminate) transport time between two BSs 12 and 12'.

It should be noted that the implementation of the first option shown in Figure 2 is fully backwards compatible with the conventional procedure, except for the Timers 12E which are readily implemented.

In practice the target BS 12' indicates in the UL-MAP message the position of the Uplink-frame (slot) where each MS associated with this BS should place their transmitted UL data. An UL slot is reserved for the MS 10 (according to the Fast Ranging IE delivered to the source BS 12 and the MS 10 in the HO_Response and MOB_BSHO-RSP) that is handing over, and is indicated in consecutive UL-MAP messages until the Timer #2 expires. The Timer #2 guarantees that the reserved uplink resource will be released for other MSs 10, such as for a case where the HO fails. The exemplary embodiments of this invention assume that the MS 10 is capable of receiving the UL-MAP message 7', after which it is able to send data to the target BS (Ranging Request message), and that the target BS 12' begins to allocate/schedule uplink transmission opportunities to the MS 10 as usual.

Another implementation option is illustrated in Figure 3, and thus depicts additional exemplary embodiments of this invention.

As in the conventional processing, after receiving the HO Request from the serving BS 12, the target BS 12' (at least one target BS 12') sends the HO Response. The serving BS 12 receives the response message and sends to the MS 10 the MOB_BSHO-RSP as a response message to the MOB_MSHO-REQ. In addition, after processing the HO response messages from possibly different target BSs 12', the serving BS 12 sends to the selected target BS(s) 12' at step 6' HO Pre-confirm information. The content of this "HO Pre-confirm" message (this name being simply descriptive of the functionality of the message) is different for those target BSs 12' within a selected target group ("Yes") and outside of the group ("No"). The selection criterion is implementation dependent and may be the same as the selection criterion for the BSs included in the message MOB_BSHO-RSP.

Those BSs 12' that receive the HO Pre-confirm messages prepare to allocate the ranging subchannel and ranging CDMA codes for the MS 10. And the target BS 12' sends out the UL-MAP message to the MS 10. Since there can be more than one BS 12' that receives the HO Pre-confirm message it is preferred to define the Timer #2 to control how long the target BS 12' will keep resources allocated for the MS 10. Timer #2 automatically stops if the HO Confirm message (message 6) is received.

Note that in the embodiments of Figures 2 and 3 each potential target BS 12' may need to at least temporarily allocate the ranging resources for the MS 10. However, since it is the MS 10 that makes the final decision about the target BS 12', this situation cannot be avoided unless the final target BS 12' is selected by the serving BS 12, or by the network 1, as described below.

In a case where the network or the BS selects the final target BS 12', this corresponds to a scenario where there is only one target BS 12' included in the MOB_BSHO-REQ as shown in Figure 4.

The basic processing principle for this embodiment is as follows. In step 1 the serving BS 12 checks the availability of the neighbor BSs for the MS 10 HO via a HO Request message. If one neighbor BS agrees to the HO, this BS includes the ranging subchannel and ranging CDMA code information in the HO Response message to the serving BS 12 (in message 2). While this information is shown as a "Fast_Ranging_IE", the particular name is illustrative and not limiting. At the same time, the neighbor BS starts Timer #2 to control the amount of time to maintain the resource allocation for the MS 10. Based on some criteria (possibly implementation specific) the serving BS 12 selects the final target BS 12' and includes the UL-MAP (Fast_Ranging_IE) from the selected target BS 12' in the MOB_BSHO-REQ message in step 3. The serving BS 12 also informs the non-selected neighbor BSs with a HO Cancellation message (3') and, upon receiving the HO Cancellation message 3' from the serving BS 12, these BSs release the resources reserved for the MS 10 (and automatically stop the Timer #2). At the same time the serving BS 12 may send the HO Pre-Confirm message 3" to the selected target BS 12' to inform the selected target BS 12' of the HO of the MS 10. The selected target BS 12' maintains the allocated resources for the MS 10 for some time. After the MS 10 makes the final decision of HO target and sends out the MOB_HO-IND (message 4) to the serving BS 12, it detaches from the serving BS 12 and can immediately utilize the UL-MAP message included in the MOB_BSHO-REQ to determine the ranging resource information without waiting for any further information from the target BS 12'. Thus, the UL-MAP (message 6) is not needed. In a case where the MS 10 does not HO, the target BS 12' releases the resources reserved for the MS 10 where the Timer #2 expires.

It should be noted that the embodiments described above with respect to Figures 2 and 3 can also be applied to the case in which the BS or the network makes the selection of the final target BS 12'.

By the use of these exemplary embodiments the HO latency and HO disruption time can be reduced significantly.

The advantages include, but are not limited to, providing simple and efficient techniques to improve HO performance. Further, improved conservation of radio resources in the candidate target BS(s) can be realized. Note that the assignment of the Fast_Ranging_IE during the HO preparation phase can achieve significantly improved HO latency performance. Further, the embodiment described in reference to Figure 2 is fully backwards compatible with already defined HO procedures except for the Timer which, however, can be readily implemented in the BSs. Note further that in Figure 3 the MS 10 initiated HO is fully backwards compatible with the already specified air-interface.
(A) Based on the foregoing it should be apparent that the exemplary embodiments of this invention provide a method, apparatus and computer program product(s) to reduce HO latency by sending information descriptive of a MS HO resource allocation from at least one potential target BS prior to the target BS receiving a HO Confirm message from a currently serving BS.
(B) The method, apparatus and computer program product(s) as in the previous paragraph, where the information descriptive of the MS HO resource allocation is sent in response to expiration of a Timer that is started after receiving a HO Request from the currently serving BS.
(C) The method, apparatus and computer program product(s) as in paragraph (A), where the information descriptive of the MS HO resource allocation is sent in response to a receipt of an affirmative HO Pre-confirm message received from the currently serving BS after sending the currently serving BS a HO Response message.
(D) The method, apparatus and computer program product(s) as in paragraph (A), where the information descriptive of the MS HO resource allocation is sent with a HO Response message in response to a receipt of a HO Request message.
(E) The method, apparatus and computer program product(s) as in paragraphs (B) and (C), where the information descriptive of the MS HO resource allocation is sent directly to the MS.
(F) The method, apparatus and computer program product(s) as in paragraph (D), where the information descriptive of the MS HO resource allocation is sent to the currently serving BS, which forwards the information descriptive of the MS HO resource allocation to the MS as part of a MOB_BSHO-REQ message.
(G) The method, apparatus and computer program product(s) as in paragraphs (A)-(F), further comprising the potential target BS initiating a release Timer upon sending the information descriptive of the MS HO resource allocation, and subsequently releasing the MS HO resource allocation upon an expiration of the release Timer.
(H) The method, apparatus and computer program product(s) as in paragraphs (A)-(G), where the information descriptive of the MS HO resource allocation comprises information descriptive of allocated unique CDMA ranging codes and ranging subchannels.
(I) The method, apparatus and computer program product(s) as in paragraphs (A)-(H), embodied in a network compatible with IEEE 802.16e.

In general, the various message flows and blocks shown in Figures 2-4 may be viewed as method steps, and/or as operations that result from operation of computer program code, and/or as a plurality of coupled logic circuit elements constructed to carry out the associated function(s).

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the inventions may be practiced in various components such as integrated circuit chips and modules. The design of integrated circuits is by and large a highly automated process. Complex and powerful software tools are available for converting a logic level design into a semiconductor circuit design ready to be fabricated on a semiconductor substrate. Such software tools can automatically route conductors and locate components on a semiconductor substrate using well established rules of design, as well as libraries of pre-stored design modules. Once the design for a semiconductor circuit has been completed, the resultant design, in a standardized electronic format (e.g., Opus, GDSII, or the like) may be transmitted to a semiconductor fabrication facility for fabrication as one or more integrated circuit devices.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above in the context of the WiMAX IEEE 802.16-type system, it should again be noted that the exemplary embodiments of this invention are not limited for use with only this one particular type of wireless communication system, and that they may be used to advantage in other wireless communication systems.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A target base station (12') apparatus, comprising:
means for receiving a handover request for a mobile station (10) from a serving base station (12); and
means for accepting the handover request at the target base station;
**and characterized by**
means for sending towards the mobile station, prior to receiving a handover confirm message from the currently serving base station, information descriptive of a mobile station handover resource allocation for use by the mobile station (10) in a ranging process with the target base station (12').

2. The apparatus of claim 1, wherein
said means for sending comprises means for sending the information descriptive of the mobile station handover resource allocation directly from the target base station (12') to the mobile station (10).

3. The apparatus of claim 1, where
said means for sending comprises means for sending the information descriptive of the mobile station handover resource allocation through the serving base station (12) to the mobile station (10), as part of a handover response message.

4. The apparatus of claim 2, wherein
said means for sending comprises means for sending the information descriptive of the mobile station handover resource allocation in response to receiving an affirmative handover pre-confirm message from the currently serving base station (12), where said affirmative handover pre-confirm message was received by the target base station (12') after sending the currently serving base station a handover response message.

5. The apparatus of claim 1, further comprising:
means for releasing the mobile station handover resource allocation in response to receiving a negative handover pre-confirm message from the currently serving base station (12), where said negative handover pre-confirm message is received by the target base station (12') after sending the currently serving base station a handover response message.

6. The apparatus of claim 2, further comprising:
means for initiating a timer (12E) after receiving the handover request, the timer associated with sending the information descriptive of the mobile station handover resource allocation.

7. The apparatus of claim 6, further comprising:
means for sending the information descriptive of the mobile station handover resource allocation after the timer (12E) expires.

8. A serving base station (12) apparatus, comprising:
means for sending a handover request for a mobile station (10) to a target base station (12'); **characterized by**
means for receiving, prior to sending a handover confirm message to the target base station, information descriptive of a mobile station handover resource allocation for use by the mobile station (10) in a ranging process with the target base station (12') with a handover response message from the target base station; and
means for forwarding to the mobile station the information descriptive of the mobile station handover resource allocation received from the target base station (12').

9. A mobile station (10) apparatus, comprising:
means for sending to a currently serving base station (12) a mobile station handover request; **characterized by**
means for receiving information descriptive of a mobile station handover resource allocation prior to sending information descriptive of a mobile station handover indication message to the currently serving base station,; and
means for using the information descriptive of a mobile station handover resource allocation in a ranging process with the target base station.

10. The apparatus of claim 9, where
said means for receiving comprises means for receiving the information descriptive of the mobile station handover resource allocation from a target base station (12') via a currently serving base station (12).

11. The apparatus of any of claims 1 to 10, embodied at least partially in an integrated circuit.

12. A method for execution at a target base station (12'), comprising:
receiving a handover request for a mobile station (10) from a serving base station (12); and
accepting the handover request at the target base station;
and **characterized by**
sending towards the mobile station, prior to receiving a handover confirm message from the currently serving base station, information descriptive of a mobile station handover resource allocation for use by the mobile station (10) in a ranging process with the target base station (12').

13. A method for execution at a serving base station (12), comprising:
sending a handover request for a mobile station (10) to a target base station (12'); **characterized by**
receiving, prior to sending a handover confirm message to the target base station, information descriptive of a mobile station handover resource allocation for use by the mobile station (10) in a ranging process with the target base station (12') with a handover response message from the target base station; and
forwarding to the mobile station the information descriptive of the mobile station handover resource allocation received from the target base station (12').

14. A method for execution at a mobile station (10), comprising:
sending to a currently serving base station (12) a mobile station handover request; **characterized by**
receiving information descriptive of a mobile station handover resource allocation prior to sending information descriptive of a mobile station handover indication message to the currently serving base station; and
using the information descriptive of a mobile station handover resource allocation in a ranging process with the target base station.

15. A computer program product comprising program instructions embodied on a tangible computer-readable medium, execution of the program instructions resulting in operations performing all steps of any of claims 12-13 or all steps of claim 14.

## Patentansprüche

1. Ziel-Basisstations-(12')-Vorrichtung, umfassend:
ein Mittel zum Empfangen einer Übergabeanforderung für eine Mobilstation (10) von einer Bedienungs-Basisstation (12); und
ein Mittel zum Akzeptieren der Übergabeanforderung in der Ziel-Basisstation;
und **gekennzeichnet durch**
ein Mittel zum Senden zu der Mobilstation, vor dem Empfangen einer Übergabebestätigungsnachricht von der aktuellen Bedienungs-Basisstation, einer Information zur Beschreibung einer Mobilstationsübergabe-Ressourcenzuweisung zur Verwendung durch die Mobilstation (10) in einem Ortungsprozess mit der Ziel-Basisstation (12').

2. Vorrichtung nach Anspruch 1, wobei
das Mittel zum Senden ein Mittel zum direkten Senden der Information zur Beschreibung der Mobilstationsübergabe-Ressourcenzuweisung von der Ziel-Basisstation (12') zur Mobilstation (10) umfasst.

3. Vorrichtung nach Anspruch 1, wobei
das Mittel zum Senden ein Mittel zum Senden der Information zur Beschreibung der Mobilstationsübergabe-Ressourcenzuweisung durch die Bedienungs-Basisstation (12) an die Mobilstation (10) als Teil einer Übergabeantwortnachricht umfasst.

4. Vorrichtung nach Anspruch 2, wobei
das Mittel zum Senden ein Mittel zum Senden der Information zur Beschreibung der Mobilstationsübergabe-Ressourcenzuweisung in Antwort auf das Empfangen einer affirmativen Übergabe-Vorbestätigungsnachricht von der aktuellen Bedienungs-Basisstation (12) umfasst, wobei die affirmative Übergabe-Vorbestätigungsnachricht durch die Ziel-Basisstation (12') empfangen wurde, nachdem die aktuelle Bedienungs-Basisstation eine Übergabeantwortnachricht gesendet hat.

5. Vorrichtung nach Anspruch 1, ferner umfassend:
ein Mittel zur Freigabe der Mobilstationsübergabe-Ressourcenzuweisung in Antwort auf das Empfangen einer negativen Übergabe-Vorbestätigungsnachricht von der aktuellen Bedienungs-Basisstation (12),
wobei die negative Übergabe-Vorbestätigungsnachricht durch die Ziel-Basisstation (12') empfangen wird, nachdem die aktuelle Bedienungs-Basisstation eine Übergabeantwortnachricht gesendet hat.

6. Vorrichtung nach Anspruch 2, ferner umfassend:
ein Mittel zum Initiieren eines Zeitgebers (12E) nach dem Empfangen der Übergabeanforderung, wobei der Zeitgeber mit dem Senden der Informationen zur Beschreibung der Mobilstationsübergabe-Ressourcenzuweisung assoziiert ist.

7. Vorrichtung nach Anspruch 6, ferner umfassend:
ein Mittel zum Senden der Information zur Beschreibung der Mobilstationsübergabe-Ressourcenzuweisung nach dem Ablauf des Zeitgebers (12E).

8. Bedienungs-Basisstations-(12)-Vorrichtung, umfassend:
ein Mittel zum Senden einer Übergabeanforderung für eine Mobilstation (10) an eine Ziel-Basisstation (12'); **gekennzeichnet durch**
ein Mittel zum Empfangen, vor dem Senden einer Übergabebestätigungsnachricht an die Ziel-Basisstation, einer Information zur Beschreibung einer Mobilstationsübergabe-Ressourcenzuweisung zur Verwendung durch die Mobilstation (10) in einem Ortungsprozess mit der Ziel-Basisstation (12') mit einer Übergabeantwortnachricht von der Ziel-Basisstation; und
ein Mittel zum Weiterleiten an die Mobilstation der Information zur Beschreibung der Mobilstationsübergabe-Ressourcenzuweisung, die von der Ziel-Basisstation (12') empfangen wurde.

9. Mobilstations-(10)-Vorrichtung, umfassend:
ein Mittel zum Senden einer Mobilstations-Übergabeanforderung an eine aktuelle Bedienungs-Basisstation (12); **gekennzeichnet durch**
ein Mittel zum Empfangen einer Information zur Beschreibung einer Mobilstationsübergabe-Ressourcenzuweisung vor dem Senden einer Information zur Beschreibung einer Mobilstationsübergabe-Hinweisnachricht an die aktuelle Bedienungs-Basisstation; und
ein Mittel zum Verwenden der Information zur Beschreibung einer Mobilstationsübergabe-Ressourcenzuweisung in einem Ortungsprozess mit der Ziel-Basisstation.

10. Vorrichtung nach Anspruch 9, wobei
das Mittel zum Empfangen ein Mittel zum Empfangen der Information zur Beschreibung der Mobilstationsübergabe-Ressourcenzuweisung von einer Ziel-Basisstation (12') über eine aktuelle Bedienungs-Basisstation (12) umfasst.

11. Vorrichtung nach einem der Ansprüche 1 bis 10, die wenigstens teilweise in einer integrierten Schaltung verkörpert ist.

12. Verfahren zum Ausführen in einer Ziel-Basisstation (12'), umfassend:
Empfangen einer Übergabeanforderung für eine Mobilstation (10) von einer Bedienungs-Basisstation (12); und
Akzeptieren der Übergabeanforderung in der Ziel-Basisstation;
und **gekennzeichnet durch**
Senden an die Mobilstation, vor dem Empfangen einer Übergabebestätigungsnachricht von der aktuellen Bedienungs-Basisstation, einer Information zur Beschreibung einer Mobilstationsübergabe-Ressourcenzuweisung zur Verwendung durch die Mobilstation (10) in einem Ortungsprozess mit der Ziel-Basisstation (12').

13. Verfahren zum Ausführen in einer Bedienungs-Basisstation (12), umfassend:
Senden einer Übergabeanforderung für eine Mobilstation (10) an eine Ziel-Basisstation (12'); **gekennzeichnet durch**
Empfangen, vor dem Senden einer Übergabebestätigungsnachricht an die Ziel-Basisstation, einer Information zur Beschreibung einer Mobilstationsübergabe-Ressourcenzuweisung zur Verwendung durch die Mobilstation (10) in einem Ortungsprozess mit der Ziel-Basisstation (12') mit einer Übergabeantwortnachricht von der Ziel-Basisstation; und
Weiterleiten an die Mobilstation der Information zur Beschreibung der Mobilstationsübergabe-Ressourcenzuweisung, die von der Ziel-Basisstation (12') empfangen wurde.

14. Verfahren zum Ausführen in einer Mobilstation (10), umfassend:
Senden einer Mobilstations-Übergabeanforderung an eine aktuelle Bedienungs-Basisstation (12); **gekennzeichnet durch**
Empfangen einer Information zur Beschreibung einer Mobilstationsübergabe-Ressourcenzuweisung vor dem Senden einer Information zur Beschreibung einer Mobilstationsübergabe-Hinweisnachricht an die aktuelle Bedienungs-Basisstation; und
Verwenden der Information zur Beschreibung einer Mobilstationsübergabe-Ressourcenzuweisung in einem Ortungsprozess mit der Ziel-Basisstation.

15. Computerprogrammprodukt, umfassend Programmanweisungen, die auf einem materiellen computerlesbaren Medium verkörpert sind, wobei die Ausführung der Programmanweisungen in Operationen resultiert, die alle Schritte von einem der Ansprüche 12 der 13 oder alle Schritte von Anspruch 14 durchführen.

## Revendications

1. Appareil de station de base cible (12'), comprenant :
des moyens pour recevoir une demande de transfert pour une station mobile (10) en provenance d'une station de base de desserte (12) ; et
des moyens pour accepter la demande de transfert au sein de la station de base cible ;
et **caractérisé par**
des moyens pour envoyer vers la station mobile, avant la réception d'un message de confirmation de transfert en provenance de la station de base de desserte actuelle, des informations descriptives d'une allocation de ressources de transfert de station mobile à utiliser par la station mobile (10) dans un processus de mesure de distance avec la station de base cible (12').

2. Appareil selon la revendication 1, dans lequel
lesdits moyens d'envoi comprennent des moyens pour envoyer les informations descriptives de l'allocation de ressources de transfert de station mobile à la station mobile (10) directement par la station de base cible (12').

3. Appareil selon la revendication 1, dans lequel
lesdits moyens d'envoi comprennent des moyens pour envoyer les informations descriptives de l'allocation de ressources de transfert de station mobile à la station mobile (10) par l'intermédiaire de la station de base de desserte (12), à l'intérieur d'un message de réponse de transfert.

4. Appareil selon la revendication 2, dans lequel
lesdits moyens d'envoi comprennent des moyens pour envoyer les informations descriptives de l'allocation de ressources de transfert de station mobile en réponse à la réception d'un message de pré-confirmation de transfert affirmatif en provenance de la station de base de desserte actuelle (12), ledit message de pré-confirmation de transfert affirmatif ayant été reçu par la station de base cible (12') après l'envoi d'un message de réponse de transfert à la station de base de desserte actuelle.

5. Appareil selon la revendication 1, comprenant en outre :
des moyens pour libérer l'allocation de ressources de transfert de station mobile en réponse à la réception d'un message de pré-confirmation de transfert négatif en provenance de la station de base de desserte actuelle (12), ledit message de pré-confirmation de transfert négatif étant reçu par la station de base cible (12') après l'envoi d'un message de réponse de transfert à la station de base de desserte actuelle.

6. Appareil selon la revendication 2, comprenant en outre :
des moyens pour démarrer un chronomètre (12E) après la réception de la demande de transfert, le chronomètre étant associé à l'envoi des informations descriptives de l'allocation de ressources de transfert de station mobile.

7. Appareil selon la revendication 6, comprenant en outre :
des moyens pour envoyer les informations descriptives de l'allocation de ressources de transfert de station mobile après l'expiration du chronomètre (12E).

8. Appareil de station de base de desserte (12), comprenant :
des moyens pour envoyer une demande de transfert pour une station mobile (10) à une station de base cible (12') ; **caractérisé par**
des moyens pour recevoir, avant l'envoi d'un message de confirmation de transfert à la station de base cible, des informations descriptives d'une allocation de ressources de transfert de station mobile à utiliser par la station mobile (10) dans un processus de mesure de distance avec la station de base cible (12') avec un message de réponse de transfert provenant de la station de base cible ; et
des moyens pour transmettre à la station mobile les informations descriptives de l'allocation de ressources de transfert de station mobile reçues en provenance de la station de base cible (12').

9. Appareil de station mobile (10), comprenant :
des moyens pour envoyer à une station de base de desserte actuelle (12) une demande de transfert de station mobile ; **caractérisé par**
des moyens pour recevoir des informations descriptives d'une allocation de ressources de transfert de station mobile avant l'envoi d'informations descriptives d'un message d'indication de transfert de station mobile à la station de base de desserte actuelle ; et
des moyens pour utiliser les informations descriptives d'une allocation de ressources de transfert de station mobile dans un processus de mesure de distance avec la station de base cible.

10. Appareil selon la revendication 9, dans lequel
lesdits moyens de réception comprennent des moyens pour recevoir les informations descriptives de l'allocation de ressources de transfert de station mobile en provenance d'une station de base cible (12') par l'intermédiaire d'une station de base de desserte actuelle (12).

11. Appareil selon l'une quelconque des revendications 1 à 10, mis en oeuvre au moins partiellement dans un circuit intégré.

12. Procédé destiné à être exécuté au sein d'une station de base cible (12'), comprenant :
la réception d'une demande de transfert pour une station mobile (10) en provenance d'une station de base de desserte (12) ; et
l'acceptation de la demande de transfert au sein de la station de base cible ;
et **caractérisé par**
l'envoi vers la station mobile, avant la réception d'un message de confirmation de transfert en provenance de la station de base de desserte actuelle, d'informations descriptives d'une allocation de ressources de transfert de station mobile à utiliser par la station mobile (10) dans un processus de mesure de distance avec la station de base cible (12').

13. Procédé destiné à être exécuté au sein d'une station de base de desserte (12), comprenant :
l'envoi d'une demande de transfert pour une station mobile (10) à une station mobile cible (12') ;
**caractérisé par**
la réception, avant l'envoi d'un message de confirmation de transfert à la station de base cible, d'informations descriptives d'une allocation de ressources de transfert de station mobile à utiliser par la station mobile (10) dans un processus de mesure de distance avec la station de base cible (12') avec un message de réponse de transfert en provenance de la station de base cible ; et
la transmission à la station mobile des informations descriptives de l'allocation de ressources de transfert de station mobile reçues de la station de base cible (12').

14. Procédé destiné à être exécuté au sein d'une station mobile (10), comprenant :
l'envoi à une station de base de desserte actuelle (12) d'une demande de transfert de station mobile ;
**caractérisé par**
la réception d'informations descriptives d'une allocation de ressources de transfert de station mobile avant l'envoi d'informations descriptives d'un message d'indication de transfert de station mobile à la station de base de desserte actuelle ; et
l'utilisation des informations descriptives d'une allocation de ressources de transfert de station mobile dans un processus de mesure de distance avec la station de base cible.

15. Produit de programme informatique comprenant des instructions de programme mises en oeuvre sur un support tangible lisible par ordinateur, l'exécution des instructions de programme se traduisant par des opérations réalisant toutes les étapes de l'une quelconque des revendications 12-13 ou toutes les étapes de la revendication 14.
